# EUROPEAN PATENT SPECIFICATION

(11) **EP 1 627 777 B1**
(45) Date of publication and mention of the grant of the patent: **25.03.2009**
(21) Application number: 05017708.8
(22) Date of filing: 15.08.2005
(51) Int. Cl.: B60R 13/10

(54) **A registration display assembly for a vehicle**
Ein Nummerschild für ein Kraftfahtzeug
Plaque minéralogique pour un véhicule

(30) Priority: 17.08.2004 GB 0418276
(43) Date of publication of application: 22.02.2006
(73) Proprietor: The House of Plastic Limited, Buckingham Road Industrial Estate Brackley NN13 7BE (GB)
(72) Inventor: Purvis, Nigel Derek, Milton Keynes, Buckinghamshire MK4 1HU (GB)
(74) Representative: Raynor, Simon Mark

(56) References cited:
- US-A- 4 246 307
- US-A- 6 129 975
- US-B1- 6 324 778

## Description

The present invention relates to vehicle registration display assemblies, such as vehicle registration plates.

Producers of registration plates are licensed in some countries, for example in the United Kingdom, which makes it difficult to obtain false registration plates via a manufacturer. Because of this, there has been an increase in the number of thefts of vehicle registration plates directly from vehicles.

Vehicle registration plates are typically attached to vehicles using screws, bolts or double sided foam adhesive are and arranged such that they can be easily removed from the vehicle. Whilst this is convenient for the owner of the vehicle, who may wish to change a registration plate for legitimate reasons, it also makes theft of registration plates very easy.

Registration plates are stolen and attached to other vehicles for many reasons, for example to avoid paying congestion charges, parking tickets, speeding tickets or additional fines associated with those infractions. Since these punitive systems rely heavily on the driver of the vehicle also being the registered keeper of the vehicle, or a person associated with the registered keeper, a person using a stolen registration plate is able to easily avoid the charges and fines payable since that person cannot be identified from the registration code.

US 4,246,307 discloses a vehicle registration plate according to the preamble of claim 1.

Accordingly the present invention seeks to provide an improved vehicle registration display assembly that mitigates at least some of the above-mentioned problems.

According to one aspect of the present invention there is provided a registration display assembly for a vehicle according claim 1.

The separable portion of the dividable element remains attached to the vehicle when the registration assembly is removed from the vehicle which destroys the registration code.

Thus the invention cannot be used on other vehicles since it is obvious upon simple visual inspection that the registration code is incomplete.

Advantageously the separable portion of the dividable element may include a frangible portion. Preferably the frangible portion includes at least one area of weakness to allow the separable portion to separate from the remainder of the dividable element more easily. For example, the dividable element can include at least one line of weakness such as a perforated line, a crease, a partial cut, a thinned, stretched or compressed area that allows the separable portion to separate from the remainder of the dividable element more easily when the assembly is removed from a vehicle. Preferably the area of weakness is formed in the dividable element by mechanical means.

Alternatively, the dividable element may include at least first and second separate parts and the fixing means is arranged to fix one of the parts to the vehicle.

Preferably the separable portion is arranged to have a decorative profile. For example, the decorative profile can define a logo or word. This feature can be included in embodiments of the invention that are frangible and embodiments having a dividable element that comprises at least first and second separate parts.

Advantageously the registration code can be applied to one of the dividable element, the support element and the means for attaching the dividable element to the support element. The registration code is preferably applied by printing.

Preferably the fixing means includes an adhesive. For example, the fixing means may include double sided adhesive tape, or a layer of contact adhesive to permanently fix the separable portion of the dividable element to the vehicle. Additionally, or alternatively, the fixing means may include screw elements such as tamper proof screws to provide a secure attachment.

The means for reducing adhesion between the separable portion of the dividable element and the support element includes a barrier comprising a strip of low tack film located between at least one of the support element and the adhesive layer and the adhesive layer and the separable portion of the dividable element. The barrier may also include at least an oil based product or wax. The barrier is substantially aligned with the separable portion of the dividable element to prevent it from adhering to the support element when the registration assembly is removed from the vehicle. Alternatively, or additionally, at least one part of the layer of adhesive can be chemically treated to reduce adhesion and/or the layer of adhesive can include areas of weakness arranged to weaken the intra adhesive bonds to allow the separable portion of the dividable element to detach from the support element more easily.

Advantageously the support member can be at least partially transparent.

An embodiment of the present invention will now be described, by way of example only, with reference to the accompanying drawings in which like references indicate equivalent features, wherein:
Figure 1 is an exploded perspective view of a conventional plastics vehicle registration plate;
Figures 2-5, are exploded perspective view of a registration plate for illustration purpose;
Figure 6 is an exploded perspective view of a registration plate according to a first embodiment of the invention;
Figure 7 is an exploded perspective view of a registration plate according to a second embodiment of the invention; and
Figures 8 and 9 are exploded perspective view of a registration plate for illustration purpose.

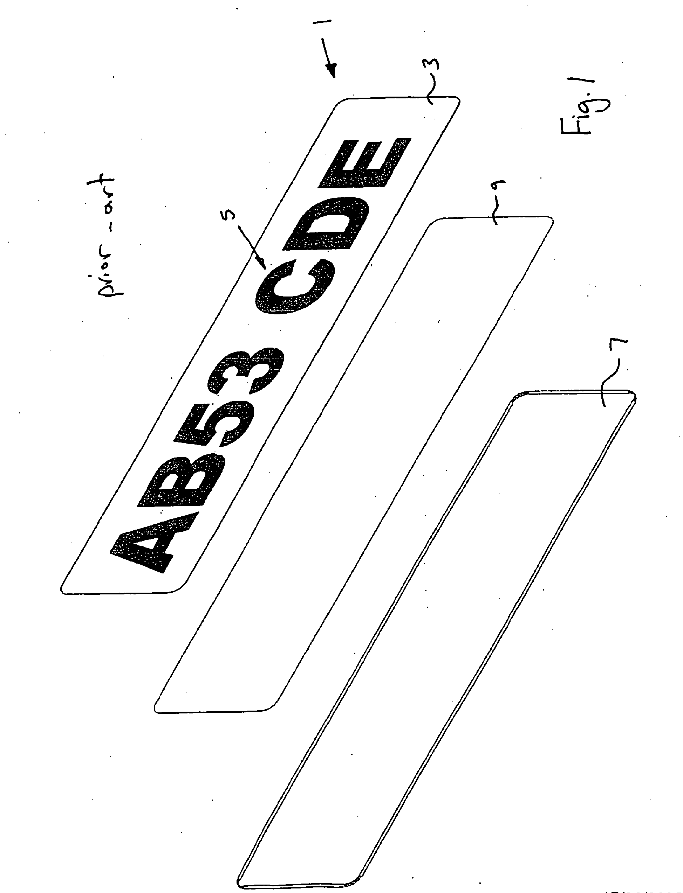

Figure 1 shows one type of conventional vehicle registration plate 1. The vehicle registration plate 1 is a substantially rectangular plastics laminated product and includes a film 3 for displaying a vehicle registration code 5 that is mounted on a cover 7 via a layer of adhesive 9.

The registration code 5 comprises letters of the alphabet and / or numbers which form a unique code for each vehicle, and in this example comprises the characters AB53CDE. The registration code 5 is arranged for visual inspection so that the registration code 5 can be read by drivers vehicles and pedestrians within the vicinity of the vehicle bearing the registration plate 1.

The film 3 is preferably a plastics film such as a polyester film, and the characters of the registration code are applied to one planar face of the film using conventional printing techniques. The film has a reflective coating so that the registration code 5 can be read at night when illuminated by car head lamps or street lighting. The printed characters of the registration code contrast with the reflective coating.

The film 3 is supported by the cover 7. The surface of the film on which the registration code is printed faces towards the cover 7. The cover 7 also protects the film 3 from mechanical damage and dirt. The cover 7 is made from a transparent material such as acrylic, and the layer of adhesive 9 is also transparent. This ensures that the vehicle registration code can be seen.

Typically registration plates 1 are applied to all road vehicles, for example cars, motorbikes, lorries, construction vehicles and vans. Usually each vehicle has two registration plates 1, a first plate 1 mounted at the front of the vehicle, for example in a shallow recess formed in the front bumper, and a second plate 1 mounted at the rear of the vehicle, for example in a shallow recess on the luggage compartment (boot / trunk) cover 7. Registration plates are mounted on a vehicle using screws, bolts or double sided foam adhesive (not shown).

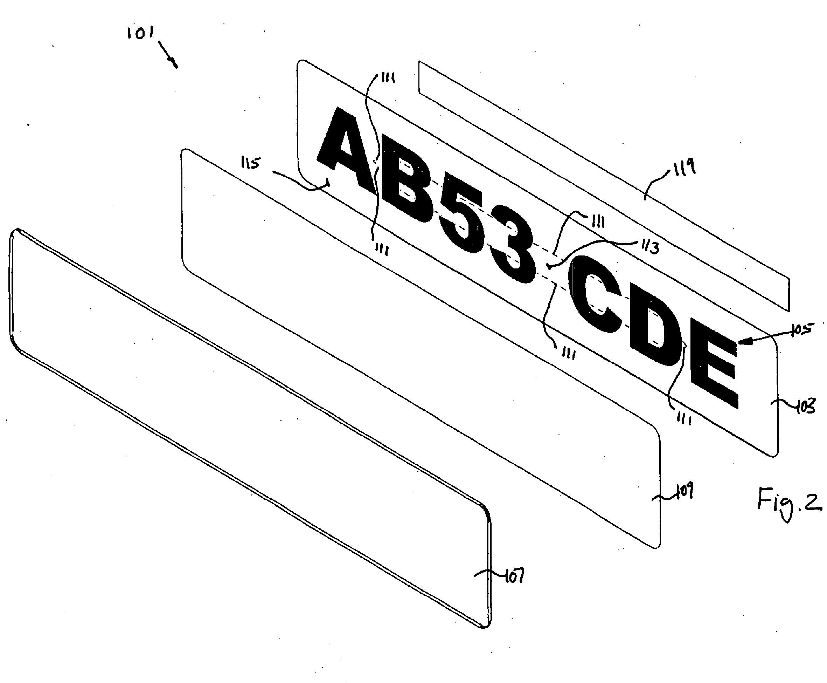

Figure 2 shows a vehicle registration plate 101 that comprises a film 103, a transparent cover 107, a layer of adhesive 109 for attaching the film 103 to the cover 107 similar to the conventional registration plate 1 described above. The cover 107, adhesive layer 109 and film 103 form a laminated product.

The film 103 in accordance with invention includes areas of weakness 111 (shown as a dotted line) formed in the film 103 that are arranged to tear the film 103 when loads are applied to it. The areas of weakness 111 are linear and are joined together to define a first part 113 that extends longitudinally across the film and a second part 115 that surrounds the first part 113. The first part 113 is aligned with at least some of the registration code characters printed on the film 103 such that when the first part 113 is separated from the second part 115 the registration code 105 is defaced and made illegible.

The areas of weakness 111 can include creases, partial cuts into the thickness of the film (so called kiss cutting), perforations or areas of weakness 111 formed by chemically weakening the film 103 in a localised area. The areas of weakness 111 can be formed integrally in the film 103 when it is produced or can be formed in the film 103 by a later machining or pressing process. This allows existing registration plates 1 to be adapted to include the invention.

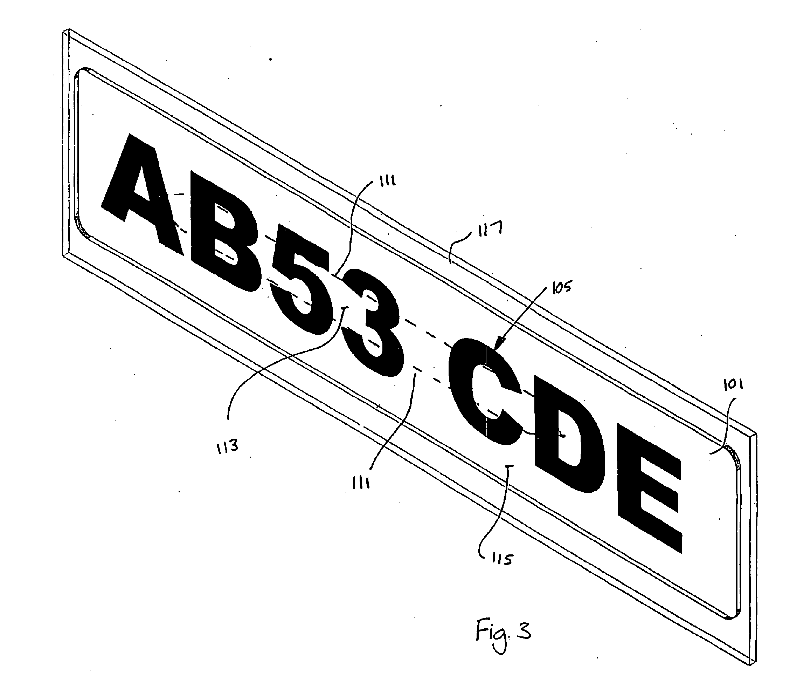

The film 103 is attached to the cover 107 via a layer of adhesive 109 similar to the conventional vehicle registration plate. The cover 107 supports the film 103. The registration plate 101 is attached to a vehicle 117 (see Figure 3) using screws or bolts which pass through holes (not shown) in the second part 115 of the film, or using or double sided foam adhesive (not shown).

A strip of double sided adhesive tape 119 is applied to the film 103 on the opposite surface to that which the registration code is printed so that it may be firmly attached to the vehicle 117. The tape 119 is aligned with the first part 113 of the film.

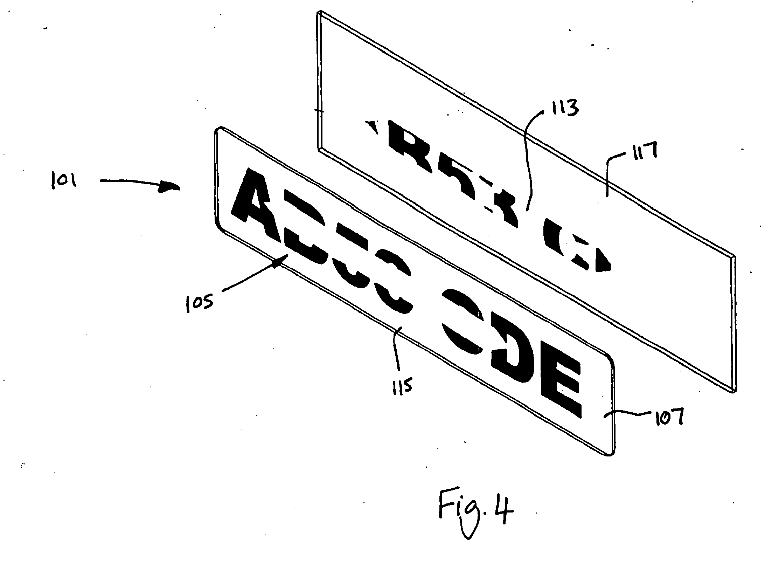

To remove the registration plate 101 from the vehicle 117, a person would first remove any screws or bolts and then prise the registration plate from the vehicle 117 on which it is mounted. When this happens, the film 103 tears along the areas of weakness 111 and the first and second parts 113,115 of the film separate: the first part 113 of the film remains fixed to the vehicle 117 because of the adhesive tape 119 and the second part 115 of the film remains attached to the cover 107 and is separated from the vehicle 114 (see Figure 4). The vehicle registration code 105 is thus defaced. When the registration plate 101 is inspected it will be obvious that parts of some of the characters of the registration code 105 are missing, thus rendering the vehicle registration plate 101 unusable for other vehicles.

The areas of weakness 111 can be arranged in any manner that causes the film 103 to separate into a plurality of parts when it tears and wherein the registration code 105 is defaced. For example, a single line of weakness 111 extending across the width or length of the film can be used to separate the film 103 into two halves. An adhesive fixing can be applied between one half of the film and the vehicle 117 and not the other, such that only one half of the film will remain attached to the vehicle 117 and the other half will be detached from the vehicle 117. The areas of weakness 111 can be arranged to form a pattern, word or logo. For example, when the first and second parts 113,115 separate the profile of the first part 113 will be the same as the profile of the logo / word and the second part 115 will have a hole with a complementary profile.

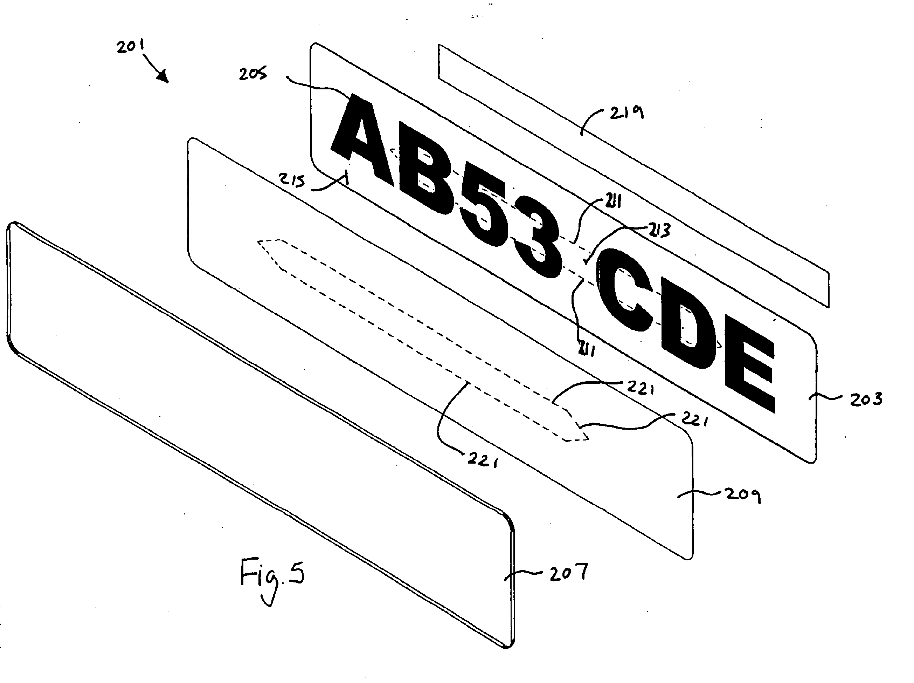

Figure 5 shows an assembly 201 similar to the assembly of Figure 2 that includes a film 203 having first and second parts 213,215 defined by areas of weakness 211 formed in the film, a strip of double sided adhesive tape 219 for attaching the first part 213 of the film to a vehicle, a transparent cover 207 and a layer of adhesive 209 for attaching the cover 207 to the film 203.

The areas of weakness 221 (shown as dotted lines) are formed in the adhesive layer 209 to ensure that when the registration plate 201 is removed from a vehicle the first part 213 of the film separates from the cover 207 and remains attached to the vehicle. The bond between first part 213 of the film and the cover 207 is weaker than the bond between the first part 213 and the vehicle, to ensure that the first part 213 separates from the cover 207 instead of the vehicle.

Alternatively, the adhesive layer 209 can be formed with a gap therein such that at least a portion of the first part 213 of the film is not overlayed with adhesive, thereby eliminating adhesion between the first part 213 and the cover 207 to ensure that the first part 213 remains attached to the vehicle and not the cover 207 when the registration plate 201 is removed from the vehicle.

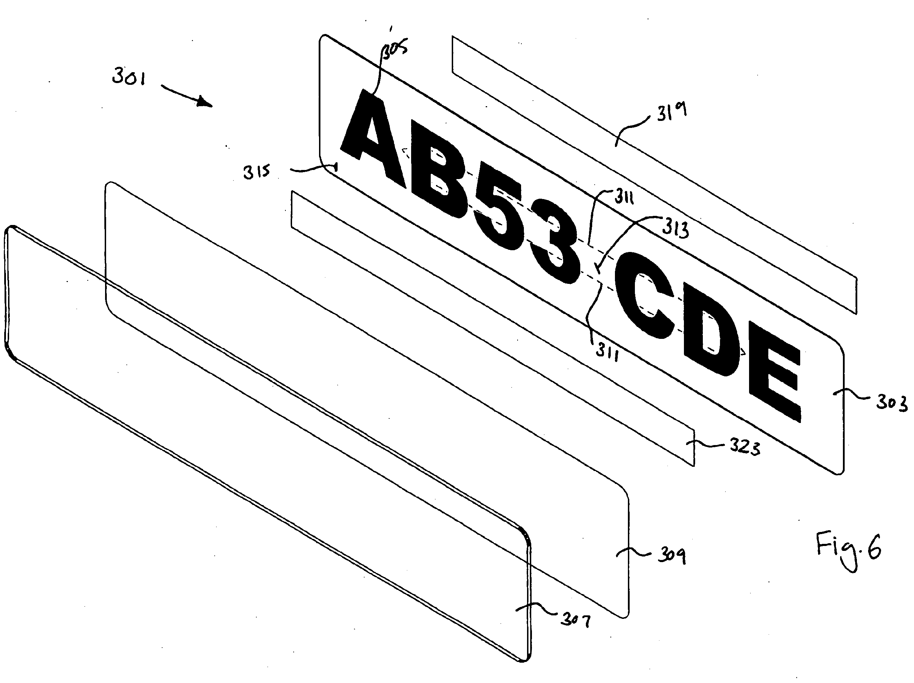

Figure 6 shows a first embodiment 301 of the invention. The first embodiment 301 is similar to the assembly of Fig. 2 and 5 and comprises a film 303 having first and second parts 313,315 defined by areas of weakness 311 formed in the film 303, a strip of double sided adhesive tape 319 for attaching the first part 313 of the film to a vehicle, a transparent cover 307 and a layer of adhesive 309 for attaching the cover 307 to the film 303.

Instead of creating areas of weakness or a gap in the adhesive layer 309 to ensure that the first part 313 of the film remains attached to a vehicle when the registration plate is removed, the third embodiment includes a strip of low tack film 323, such as low density polyethylene between the adhesive layer 309 and the first part 313. The low tack film 323 is used to reduce the adhesion between the first part 313 of the film and the adhesive layer 309 to ensure that the first part 313 separates from the protective cover 307 and not the vehicle. When separation takes place, the low tack film 323 remains adhered to the adhesive layer 309.

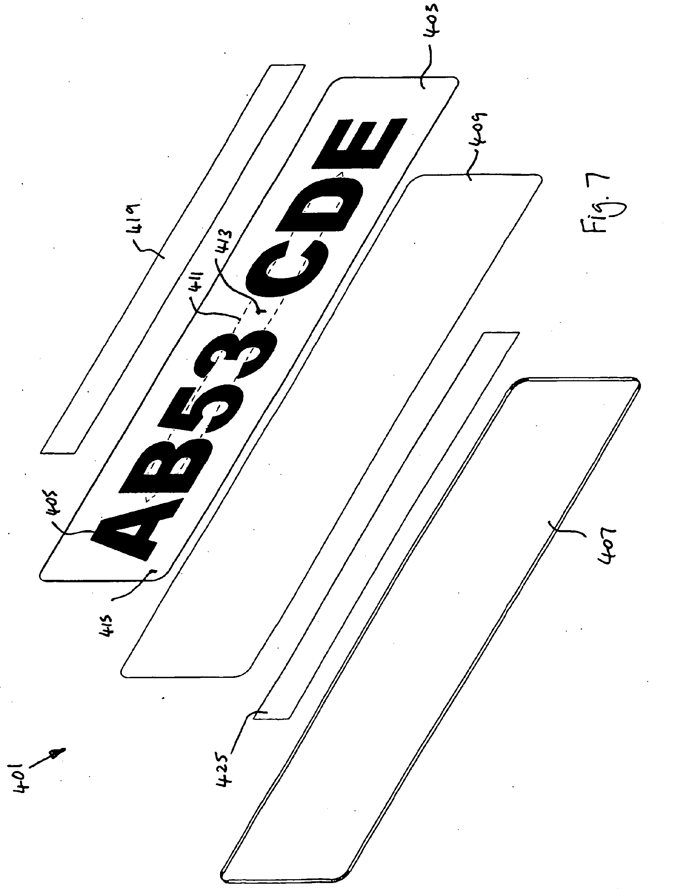

Figure 7 shows a second embodiment 401 of the invention. The second embodiment 401 is similar to the first embodiment and comprises a film 403 having first and second parts 413,415 defined by areas of weakness 411 formed in the film 403, a strip of double sided adhesive tape 419 for attaching the first part 413 to a vehicle, a transparent cover 407, a layer of adhesive 409 for attaching the cover 407 to the film 403, and a strip of low tack film 425 between the layer of adhesive 409 and the cover 407.

The low tack film 425 is used to reduce the adhesion between the adhesive layer 409 and the cover 407 to ensure that the first part 413 of the film separates from the protective cover 407 when the registration plate 401 is removed. When separation takes place, the part of the adhesive layer that extends across the first part of the film and the low tack film 425 remain attached to the vehicle with the first part 413 of the film.

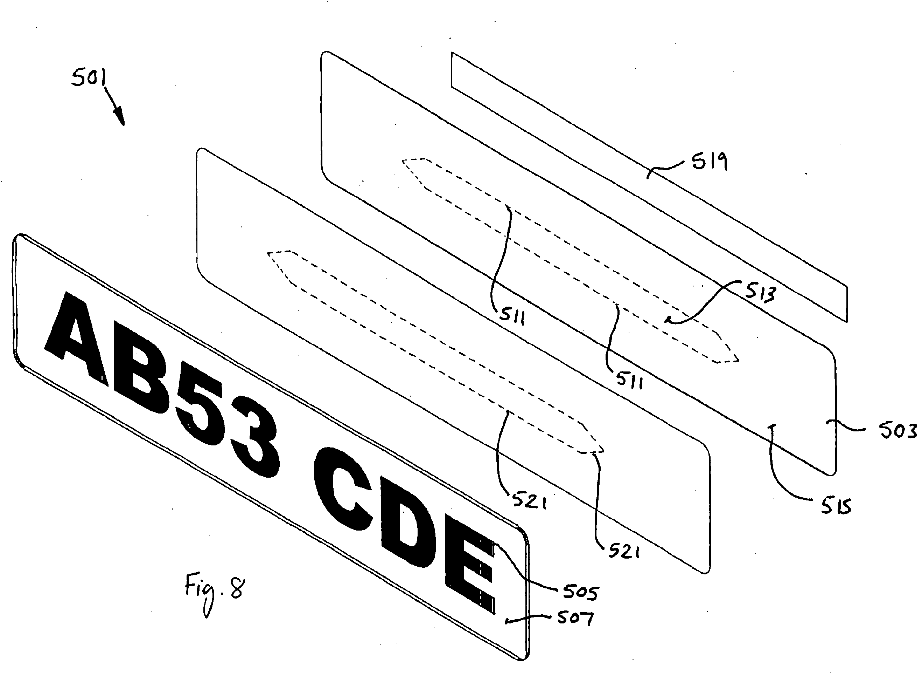

Figure 8 shows a assembly 501. The assembly 501 is arranged similarly to the assembly of Fig. 2 and comprises a film 503 having first and second parts 513,515 defined by areas of weakness 511 formed in the film, a strip of double sided adhesive tape 519 for attaching the first part 513 of the film to a vehicle, a transparent cover 507 and a layer of adhesive 509 for attaching the cover 507 to the film 503.

The registration code 505 is printed onto the internal face of the transparent cover instead of the film 503. When the registration plate is removed from a vehicle the first part 513 of the film remains attached to the vehicle due to the double sided adhesive tape 519 and the second part 515 separates from the vehicle. The arrangement is such that the bonds between the first part 513 of the film and the adhesive layer 509, and the printed registration code 505 and the adhesive layer 509. are stronger than the bonds between the registration code 505 and the cover 507, such that when the registration plate is removed from the vehicle the first part 513 of the film separates from the cover 507 and removes parts of at least some of the registration code characters from the cover 507 thereby defacing the registration code 505.

Optionally, areas of weakness 521 (shown as dotted lines) can be formed in the adhesive layer 509 to weaken intra-adhesive bonds to allow the part of the adhesive layer 509 that covers the first part 513 of the film to disassociate from the transparent cover 507 more easily.

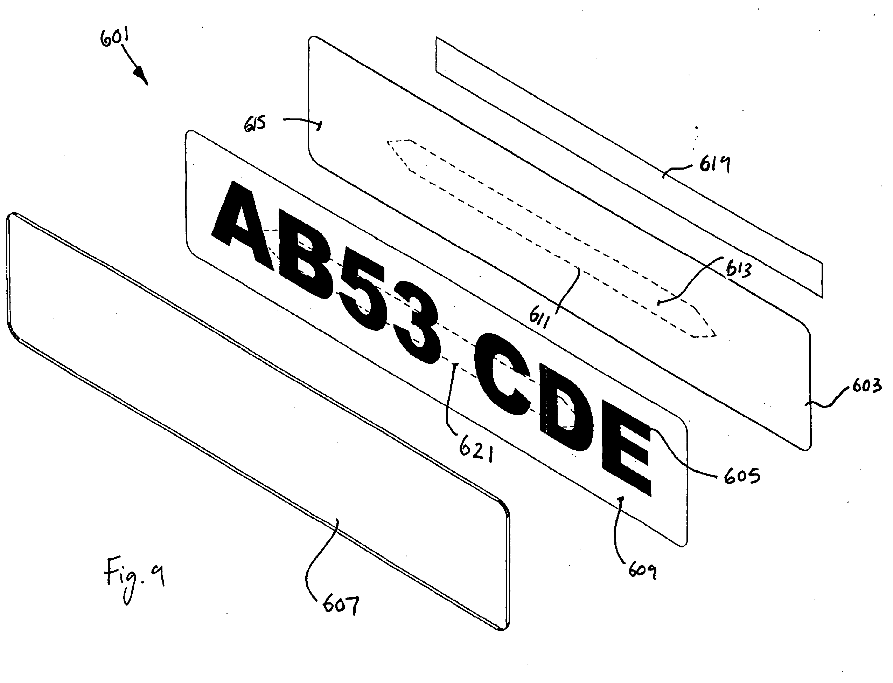

Figure 9 shows an assembly 601 that is arranged similarly to the assembly 501 in Figure 8, which comprises a film 603 having first and second parts 613,615 defined by areas of weakness 611 formed in the film, a strip of double sided adhesive tape 619 for attaching the first part 613 of the film to a vehicle, a transparent cover 607 and a layer of adhesive 609 for attaching the cover 607 to the film 603.

The registration code 605 is printed onto the adhesive layer 609 instead of the transparent cover 607, but otherwise it operates in a similar fashion to the fifth embodiment 501.

Optionally, areas of weakness 621 (shown as dotted lines) can be formed in the adhesive layer 609 to weaken intra-adhesive bonds to allow the part of the adhesive layer 609 that covers the first part 613 of the film to disassociate from the remainder of the adhesive layer more easily. '

It will be appreciated that alterations can be made to the embodiments described above without departing from the scope of the present invention. For example, it is possible to include both low tack films of the third and fourth embodiments and to use the low tack films in conjunction with the fifth and sixth embodiments. The low tack films can also be used in conjunction with areas of weakness in the adhesive layer.

To reduce adhesion between the adhesive layer and the cover and /or the adhesive layer and the first part of the film to allow separation to take place more easily, barriers such as oils, oil based products or wax can be used in addition to or as alternatives for the low tack films. For example, a layer of oil can be formed between that part of the adhesive layer that is aligned with the first part of the film and the cover. The oil prevents that part of the adhesive layer from forming a strong bond with the cover and so when the registration plate is removed from the vehicle the first part of the film separates from the cover and remains attached to the vehicle. Alternatively, or in addition, parts of the adhesive layer can be chemically treated to reduce adhesion in localised areas to have the same effect. For example, that part of the adhesive layer that is aligned with the first part of the film can be so treated.

Tamper proof screw elements can be used to secure the first part of the backing layer to the vehicle. Alternatively, some other means of permanently attaching the first part of the backing layer to the vehicle can be used provide that it does not obscure the vehicle registration code.

Additional areas of weakness can be included in the first part of the film such that if an attempt is made to prise the first part from the vehicle, the first part will tear into further pieces to ensure that it cannot be reused.

Instead of having areas of weakness that allow the first part of the film to separate from the second part of the film, the first and second parts can be entirely separate from each other for example, by cutting through the film completely.

The film may comprise any suitable plastics film or any suitable metallic film.

## Claims

1. A registration display assembly (301;401) for a vehicle, the assembly including a registration code (305;405), a dividable element (303;403), a support element (307;407) for supporting the dividable element (303;403), a layer of adhesive (309;409) for attaching the dividable element (303;403) to the support element (307;407), and fixing means for fixing the assembly (301,401) to a vehicle, wherein the dividable element (303;403) includes a separable portion (313;413) that is arranged to deface the registration code (305;405) when separated, and the fixing means includes means for fixing the separable portion to the vehicle (319;419), which is arranged to cause separation of the separable portion (313;413) when the registration display assembly is removed from the vehicle, **characterised in that** the assembly includes a strip of low tack film for reducing adhesion of the adhesive layer (309;409) between the separable portion (313;413) and the support element (307;407), wherein the strip of low tack film (323;425) is located between the support element (407) and the adhesive layer (409) or the adhesive layer (309) and the separable portion (313) of the dividable element.

2. A registration display assembly for a vehicle according to claim 1, wherein the separable portion (313;413) of the dividable element includes a frangible portion (311;411).

3. A registration display assembly for a vehicle according to claim 2, wherein the frangible portion (311,411) includes at least one area of weakness to allow the separable portion (313;413) to separate from the remainder of the dividable element more easily.

4. A registration display assembly for a vehicle according to claim 1, wherein the dividable element (303;403) comprises at least first and second separate parts and the fixing means is arranged to fix one of the parts to the vehicle.

5. A registration display assembly for a vehicle according to any one of the preceding claims, wherein the registration code (305;405) is applied to one of the dividable element (303;403), the support element (309;409) and the means for attaching the dividable element to the support element (309;409), preferably by printing.

6. A registration display assembly for a vehicle according to any one of the preceding claims, wherein the fixing means includes an adhesive.

7. A registration display assembly for a vehicle according to any one of the preceding claims, wherein the layer of adhesive (209;509;609) includes areas of weakness (221;521;621) arranged to weaken the intra adhesive bonds to allow the separable portion (213;513;613) of the dividable element (203;503;603) to detach from the support element (207;507;607) more easily.

8. A registration display assembly for a vehicle according to any one of the preceding claims, wherein the means for reducing adhesion of the adhesive layer (309;409) between the separable portion (313;413) and the support element includes at least one of a layer of oil, an oil based product or wax.

9. A registration display assembly for a vehicle according to any one of the preceding claims, wherein at least one part of the layer of adhesive (309;409) is chemically treated to reduce adhesion.

10. A registration display assembly for a vehicle according to any one of the preceding claims, wherein the separable portion (313;413) is arranged to have a decorative profile.

11. A registration display assembly for a vehicle according to claim 11, wherein the decorative profile defines a logo or word.

12. A registration display assembly for a vehicle according to any one of the preceding claims, wherein the support member (309;409) is at least partially transparent.

13. A registration display assembly for a vehicle according to any one of the preceding claims, including first and second strips of low tack film (323;425), wherein the first strip is located between the support element (407) and the adhesive layer (409) and the second strip is located between the adhesive layer (309) and the separable portion (313) of the dividable element.

## Patentansprüche

1. Nummernschildzeigevorrichtung (301; 401) für ein Fahrzeug, wobei die Vorrichtung eine Zulassungsnummer (305; 405), ein teilbares Element (303; 403), ein Tragelement (307; 407) zum Tragen des teilbaren Elements (303; 403), eine Klebstoffschicht (309; 409), um das teilbare Element (303; 403) am Tragelement (307; 407) zu befestigen, und Befestigungsmittel umfasst, um die Vorrichtung (301; 401) an ein Fahrzeug zu befestigen, wobei das teilbare Element (303; 403) einen trennbaren Abschnitt (313, 413) aufweist, der angeordnet ist, um die Zulassungsnummer (305; 405) unleserlich zu machen, wenn er getrennt wird, und das Befestigungsmittel ein Mittel aufweist, um den trennbaren Abschnitt an das Fahrzeug (319; 419) zu befestigen, der angeordnet ist, um die Trennung des trennbaren Abschnitts (313; 413) zu bewirken, wenn die Nummernschildvorrichtung vom Fahrzeug entfernt wird, **dadurch gekennzeichnet, dass** die Vorrichtung einen Streifen Folie mit geringer Klebkraft aufweist, um die Haftung der Klebstoffschicht (309; 409) zwischen dem trennbaren Abschnitt (313; 413) und dem Tragelement (307; 407) zu verringern, wobei der Streifen Folie mit geringer Klebkraft (323; 425) zwischen dem Tragelement (407) und der Klebstoffschicht (409) oder der Klebstoffschicht (309) und dem trennbaren Abschnitt (313) des teilbaren Elements angeordnet ist.

2. Nummernschildzeigevorrichtung für ein Fahrzeug nach Anspruch 1, wobei der trennbare Abschnitt (313; 413) des teilbaren Elements einen zerbrechlichen Abschnitt (311; 411) einschließt.

3. Nummernschildzeigevorrichtung für ein Fahrzeug nach Anspruch 2, wobei der zerbrechliche Abschnitt (311; 411) mindestens einen Schwächebereich aufweist, um die Trennung des trennbaren Abschnitts (313; 413) vom Rest des teilbaren Bereichs zu erleichtern.

4. Nummernschildzeigevorrichtung für ein Fahrzeug nach Anspruch 1, wobei das teilbare Element (303; 403) mindestens erste und zweite getrennte Teile umfasst und das Befestigungsmittel angeordnet ist, um einen dieser Teile am Fahrzeug zu befestigen.

5. Nummernschildzeigevorrichtung für ein Fahrzeug nach einem der vorherigen Ansprüche, wobei die Zulassungsnummer (305; 405) auf eines vom teilbaren Element (303; 403), vom Tragelement (309; 409) und vom Mittel zur Befestigung des teilbaren Elements an das Tragelement (309; 409) aufgebracht wird, bevorzugt durch Drucken.

6. Nummernschildzeigevorrichtung für ein Fahrzeug nach einem der vorherigen Ansprüche, wobei das Befestigungsmittel einen Klebstoff einschließt.

7. Nummernschildzeigevorrichtung für ein Fahrzeug nach einem der vorherigen Ansprüche, wobei die Klebstoffschicht (209; 509; 609) Schwächebereiche (221; 521; 621) aufweist, die angeordnet sind, um die Klebstoffverbindungen zu schwächen, um die Ablösung des trennbaren Abschnitts (213; 513; 613) des teilbaren Elements (203; 503; 603) vom Tragelement (207; 507; 607) zu erleichtern.

8. Nummernschildzeigevorrichtung für ein Fahrzeug nach einem der vorherigen Ansprüche, wobei das Mittel zum Verringern der Klebkraft der Klebstoffschicht (309; 409) zwischen dem trennbaren Abschnitt (313; 413) und dem Tragelement mindestens eines von einer Ölschicht, einem Produkt auf Ölbasis oder Wachs umfasst.

9. Nummernschildzeigevorrichtung für ein Fahrzeug nach einem der vorherigen Ansprüche, wobei mindestens ein Abschnitt der Klebstoffschicht (309; 409) chemisch behandelt ist, um die Klebkraft zu reduzieren.

10. Nummernschildzeigevorrichtung für ein Fahrzeug nach einem der vorherigen Ansprüche, wobei der trennbare Abschnitt (313; 413) angeordnet ist, um ein dekoratives Profil zu haben.

11. Nummernschildzeigevorrichtung für ein Fahrzeug nach Anspruch 11, wobei das dekorative Profil ein Logo oder Wort definiert.

12. Nummernschildzeigevorrichtung für ein Fahrzeug nach einem der vorherigen Ansprüche, wobei das Tragelement (309; 409) mindestens teilweise transparent ist.

13. Nummernschildzeigevorrichtung für ein Fahrzeug nach einem der vorherigen Ansprüche, umfassend erste und zweite Streifen Folie mit geringer Klebkraft (323; 425), wobei der erste Folienstreifen mit geringer Klebkraft (425) zwischen dem Tragelement (407) und der Klebstoffschicht (409) angeordnet ist und der zweite Streifen Folie mit geringer Klebkraft (323) zwischen der Klebstoffschicht (309) und dem trennbaren Abschnitt (313) des teilbaren Elements angeordnet ist.

## Revendications

1. Ensemble de plaque minéralogique (301 ; 401) pour un véhicule, l'ensemble comprenant un code minéralogique (305 ; 405), un élément divisable (303 ; 403), un élément support (307 ; 407) pour supporter l'élément divisable (303 ; 403), une couche d'adhésif (309 ; 409) pour attacher l'élément divisable (303 ; 403) à l'élément support (307 ; 407), et des moyens de fixation pour fixer l'ensemble (301 ; 401) à un véhicule, dans lequel l'élément divisable (303 ; 403) comprend une partie séparable (313 ; 413) agencée pour barbouiller le code minéralogique (305 ; 405) lorsqu'il est séparé, et les moyens de fixation comprennent des moyens pour fixer la partie séparable au véhicule (319 ; 419), agencés pour provoquer la séparation de la partie séparable (313 ; 413) lorsque l'ensemble de plaque minéralogique est enlevé du véhicule, **caractérisé en ce que** l'ensemble comprend une bande d'un film faiblement adhésif, pour réduire l'adhésion de la couche d'adhésif (309 ; 409) entre la partie séparable (313 ; 413) et l'élément support (307 ; 407), dans lequel la bande de film faiblement adhésif (323 ; 425) est placée entre l'élément support (407) et la couche d'adhésif (409), ou la couche d'adhésif (309) et la partie séparable (313) de l'élément divisable.

2. Ensemble de plaque minéralogique pour un véhicule selon la revendication 1, dans lequel la partie séparable (313 ; 413) de l'élément divisable comprend une partie fracturable (311 ; 411).

3. Ensemble de plaque minéralogique pour un véhicule selon la revendication 2, dans lequel la partie fracturable (311 ; 411) comprend au moins une zone de faiblesse pour permettre à la partie séparable (313 ; 413) de se séparer plus aisément du reste de l'élément divisable.

4. Un ensemble de plaque minéralogique pour un véhicule selon la revendication 1, dans lequel l'élément divisable (303 ; 403) comprend au moins des premières et deuxièmes parties séparées, et les moyens de fixation sont agencés pour fixer l'une des parties au véhicule.

5. Un ensemble de plaque minéralogique pour un véhicule selon l'une quelconque des revendications précédentes, dans lequel le code minéralogique (305 ; 405) est appliqué sur l'un de l'élément divisable (303 ; 403), l'élément support (309 ; 409) et les moyens de fixation de l'élément divisable à l'élément support (309 ; 409), de préférence par impression.

6. Un ensemble de plaque minéralogique pour un véhicule selon l'une quelconque des revendications précédentes, dans lequel les moyens de fixation comprennent un adhésif.

7. Un ensemble de plaque minéralogique pour un véhicule selon l'une quelconque des revendications précédentes, dans lequel la couche d'adhésif (209 ; 509 ; 609) comprend des zones de faiblesse (221 ; 521 ; 621), agencées pour affaiblir les liaisons intra-adhésif, afin de permettre à la partie séparable (213 ; 513 ; 613) des éléments divisables (203 ; 503 ; 603) de se détacher de l'élément support (207 ; 507 ; 607) plus aisément.

8. Un ensemble de plaque minéralogique pour un véhicule selon l'une quelconque des revendications précédentes, dans lequel les moyens pour réduire l'adhésion de la couche d'adhésif (309 ; 409), entre la partie séparable (313 ; 413) et l'élément support, comprennent au moins l'une d'une couche d'huile, d'un produit à base d'huile, ou de paraffine.

9. Un ensemble de plaque minéralogique pour un véhicule selon l'une quelconque des revendications précédentes, dans lequel au moins une partie de la couche d'adhésif (309 ; 409) est traitée chimiquement afin de réduire l'adhésion.

10. Un ensemble de plaque minéralogique pour un véhicule selon l'une quelconque des revendications précédentes, dans lequel la partie séparable (313 ; 413) est agencée pour avoir un profil décoratif.

11. Un ensemble de plaque minéralogique pour un véhicule selon la revendication 11, dans lequel le profil décoratif définit un logo ou un mot.

12. Un ensemble de plaque minéralogique pour un véhicule selon l'une quelconque des revendications précédentes, dans lequel l'élément support (309 ; 409) est au moins partiellement transparent.

13. Un ensemble de plaque minéralogique pour un véhicule selon l'une quelconque des revendications précédentes, comprenant des premières et deuxièmes bandes de film faiblement adhésif (323 ; 425), dans lequel la première bande de film faiblement adhésif (425) est située entre l'élément support (407) et la couche d'adhésif (409), et la deuxième bande de film faiblement adhésif (323) est placée entre la couche d'adhésif (309) et la partie séparable (313) de l'élément divisable.
